# EUROPÄISCHE PATENTSCHRIFT

(11) **EP 2 191 691 B1**
(45) Veröffentlichungstag und Bekanntmachung des Hinweises auf die Patenterteilung: **21.09.2011**
(21) Anmeldenummer: 08785274.5
(22) Anmeldetag: 31.07.2008
(51) Int. Cl.: H05B 6/02

(54) **VERFAHREN UND VORRICHTUNG ZUR INDUKTIONSERWÄRMUNG EINES METALLISCHEN WERKSTÜCKS**
METHOD AND DEVICE FOR INDUCTION HEATING OF A METALLIC WORKPIECE
PROCÉDÉ ET DISPOSITIF DE CHAUFFAGE PAR INDUCTION D'UNE PIÈCE MÉTALLIQUE

(30) Priorität: 23.08.2007 DE 102007039888
(43) Veröffentlichungstag der Anmeldung: 02.06.2010
(73) Patentinhaber: Zenergy Power GmbH, 53359 Rheinbach (DE)
(72) Erfinder: BÜHRER, Carsten, 53125 Bonn (DE); MÜLLER, Jens, 53225 Bonn (DE)
(74) Vertreter: Prietsch, Reiner
(86) Internationale Anmeldenummer: PCT/EP2008/006333
(87) Internationale Veröffentlichungsnummer: WO 2009/024253

(56) Entgegenhaltungen:
- EP-A- 1 258 973
- WO-A-2004/066681

## Beschreibung

Die Erfindung betrifft ein Verfahren zum Drehen einer ersten Magneteinheit mit mindestens einer supraleitenden (SL-), z.B. einer hochtemperatursupraleitenden (HTSL-), Spule um ein induktiv zu erwärmendes metallisches Werkstück sowie eine entsprechende Vorrichtung.

Ein solches Verfahren und eine solche Vorrichtung sind aus der EP-B-1 582 091 bekannt. Zur Erwärmung des Werkstückes wird mittels einer HTSL-Spule ein Magnetfeld erzeugt, in das das Werkstück eingebracht wird. Das Werkstück und die das Magnetfeld erzeugende gleichstromdurchflossene HTSL-Spule werden relativ zueinander gedreht, so dass auf das Werkstück ein zeitlich veränderliches Magnetfeld wirkt. Dadurch wird in dem Werkstück ein Strom induziert. Aufgrund des Ohm'schen Widerstandes des metallischen Werkstückes erwärmt der Strom das Werkstück auf eine gewünschte Temperatur. Der Drehantrieb erfolgt in der Regel über einen separaten Elektromotor, der mechanisch mit der HTSL-Spule oder dem Werkstück gekoppelt ist. Die in das Werkstück eingebrachte Leistung kann einige 100 kW erreichen, was entsprechend aufwendige und wartungsintensive Konstuktionen erfordert.

Als HTSL gibt es zum Beispiel verschiedene Seltenerd-Cupratsupraleiter wie YBa₂Cu₃O₇₋ₓ (YBCO). In der Regel haben HTSL eine SL-Sprungtemperatur oberhalb von 77K.

Aus der EP-A-1 258 973 ist für eine Synchronmaschine ein Rotor bekannt, der Feldspulen mit HTSL-Wicklungen hat. Der Rotor wird drehangetrieben, so dass das Magnetfeld des Rotors in den Spulenwicklungen des Stators einen Strom erzeugt. Die Synchronmaschine wird folglich als Generator betrieben.

Der Erfindung liegt die Aufgabe zugrunde, die Induktionserwärmung von Werkstücken mit einer SL-Spule zu vereinfachen.

Diese Aufgabe ist durch ein Verfahren nach dem Anspruch 1 und durch eine Vorrichtung nach dem Anspruch 5 gelöst. Bevorzugte Ausführungsformen sind Gegenstand der von diesen abhängigen Ansprüche.

Erfindungsgemäß wird mit einer zweiten Magneteinheit ein äußeres Magnetfeld erzeugt, welches mit einem von der ersten Magneteinheit erzeugten Magnetfeld so wechselwirkt, dass die erste Magneteinheit um das induktiv zu erwärmende Werkstück gedreht wird. Dadurch entfällt der nach dem Stand der Technik notwendige separate Elektromotor sowie die Antriebsmechanik. Damit entfällt auch ein Wärmeeintrag in die SL-Spule über die mechanische Verbindung der SL-Spule mit dem Motor.

Man kann eine Ausführungsform der Erfindung auch als Elektromotor mit einem Rotor beschreiben, der eine zur Rota-tionsachse des Rotors konzentrische Aufnahme für das Werkstück hat und eine SL-Spule trägt. Der Rotor entspricht der ersten Magneteinheit. Die zweite Magneteinheit entspricht dem Stator des Elektromotors und erzeugt ein umlaufendes Magnetfeld zum Antrieb des Rotors.

Das von der zweiten Magneteinheit erzeugte Magnetfeld wird um die Drehachse der ersten Magneteinheit gedreht. Dies ergibt einen hohen Wirkungsrad.

Beispielsweise kann die zweite Magneteinheit um die erste Magneteinheit angeordnete Spulen haben, die mit einem Wechselstrom beaufschlagt werden der ein beispielsweise um die Drehachse der ersten Magneteinheit rotierendes Magnetfeld erzeugt.

Alternativ können zur Erzeugung des die erste Magneteinheit antreibenden Magnetfeldes Permanentmagnete und/oder gleichstromdurchflossene Spulen der zweiten Magneteinheit um die Drehachse der ersten Magneteinheit gedreht werden. Bei einem solchen Verfahren wird zwar, wie bei dem aus dem Stand der Technik bekannten Verfahren, ein Elektromotor mit einer Mechanik zum Antrieb der Permanentmagnete bzw. der gleichstromdurchflossenen Spulen benötigt, jedoch hat das Verfahren gegenüber einem Antrieb der ersten Magneteinheit nach dem Stand der Technik den Vorteil, dass die erste Magneteinheit und damit die SL-Spule nicht starr über ein Getriebe oder dgl. mit dem Elektromotor gekoppelt ist, so dass ein Wärmeeintrag in die SL-Wicklung über die nach dem Stand der Technik notwendige Antriebsmechanik entfällt.

Vorzugsweise wird die SL-Spule mit Gleichstrom, insbesondere durch eine Konstantstromquelle, gespeist. Dadurch kann im Vergleich zu einer Wechselstromspeisung der SL-Spule die notwendige Kühlleistung reduziert werden. Die Spule kann nach einer initialen Bestromung auch kurzgeschlossen werden. Im Wesentlichen bleibt dann der Strom durch die SL-Spule konstant.

Eine Vorrichtung zur Durchführung des Verfahrens hat eine erste Magneteinheit, die um ein in einen Werkstückhalter eingespanntes metallisches Werkstück drehbar ist. Die erste Magneteinheit hat mindestens eine SL-Spule, typischerweise aus einem bandförmigen HTSL, wobei ein von der ersten Magneteinheit erzeugtes Magnetfeld das Werkstück durchsetzt. Zum Drehantrieb der ersten Magneteinheit hat die Vorrichtung eine zweite Magneteinheit, die ein um die Drehachse der ersten Magneteinheit rotierendes Magnetfeld erzeugt.

Vorzugsweise ist die SL-Spule an eine Konstantstromquelle angeschlossen.

Bevorzugt hat die erste Magneteinheit eine zu ihrer Drehachse konzentrische Ausnehmung, in die das zu erwärmende Werkstück einbringbar ist. Dies ermöglicht die Pole mehrerer zur ersten Magneteinheit gehöriger SL-Spulen um die Ausnehmung und somit um ein in diese eingebrachtes Werkstück anzuordnen und so eine entsprechend große magnetische Flussdichte im Werkstück zu erzeugen.

In einer bevorzugten Ausführungsform hat die zweite Magneteinheit mindestens zwei, vorzugsweise drei oder mehr relativ zum Werkstückhalter ortsfeste und mit einem elektrischen Wechselfeld beaufschlagte Spulen. Dadurch lässt sich auf einfache Weise das um die Drehachse der ersten Magneteinheit rotierende Magnetfeld erzeugen.

In einer weiteren Ausführungsform hat die zweite Magneteinheit Permanentmagneten und/oder gleichstromgespeiste Spulen, beispielsweise HTSL-Spulen, die um die Drehachse der ersten Magneteinheit drehangetrieben sind, beispielsweise durch einen Elektromotor.

Die erste Magneteinheit kann mit der SL-Spule drehfest verbundene Permanentmagneten haben, die vorzugsweise zwischen der SL-Spule und der zweiten Magneteinheit angeordnet sind. Bei einer solchen Magneteinheit wechselwirken die Permanentmagnete mit dem durch die zweite Magneteinheit erzeugten äußeren Magnetfeld, wobei die SL-Spule im Wesentlichen zur Erzeugung des das Werkstück durchsetzenden Magnetfeldes dient. Anstelle der Permanentmagneten kann die erste Magneteinheit auch eine oder mehrere Spulen haben. Die Spulen können gleichstromgespeist sein, dann erfolgt der Drehantrieb nach dem Prinzip eines Synchronmotors, sind die Spulen metallisch und kurzgeschlossen, erfolgt der Drehantrieb nach dem Prinzip eines Asynchronmotors. Selbstverständlich kann die erste Magneteinheit mehrere SL-Spulen haben, beispielsweise zwei oder vier, die vorzugsweise äquidistant um eine Ausnehmung der ersten Magneteinheit zur Aufnahme des zu erwärmenden Werkstücks angeordnet sind. Dadurch kann der das Werkstück durchsetzende magnetische Fluss und damit die Heizleistung erhöht werden.

Zwischen der SL-Spule und der zweiten Magneteinheit ist vorzugsweise eine thermische Isolierung. Dadurch wird die notwendige Kühlleistung für die SL-Spule reduziert. Am äußeren Umfang der Isolierung können Permanentmagnete angeordnet sein, deren Magnetfeld, wie schon zuvor beschrieben, mit dem äußeren Magnetfeld der zweiten Magneteinheit wechselwirkt, um die erste Magneteinheit um das zu erwärmende Werkstück zu drehen.

Die Isolierung kann beispielsweise durch einen vakuumierten Hohlraum zwischen der ersten und der zweiten Magneteinheit erreicht werden.

Zusätzlich oder alternativ ist es sinnvoll, die SL-Spule bzw. SL-Spulen auch werkstückseitig zu isolieren, z.B. durch einen vakuumierten Hohlraum.

Der Werkstückhalter kann eine Bewegung, insbesondere parallel zur Drehachse der ersten Magneteinheit, ausführen. Mit einem Schubantrieb kann durch eine zusätzliche Relativbewegung zwischen dem Werkstück und der ersten Magneteinheit die Richtung des in dem Werkstück induzierten Stromes variiert werden, was eine gleichmäßigere Erwärmung des Werkstücks und einen größeren Leistungseintrag ermöglicht.

Anhand der Zeichnung wird die Erfindung schematisch vereinfacht und beispielhaft erläutert. Es zeigt:
- Fig. 1: eine Vorrichtung zur Induktionserwärmung,
- Fig. 2: eine Ansicht eines Magnetsystems gemäß Fig. 1,
- Fig. 3: einen Schnitt durch das Magnetsystem gemäß Fig. 1,
- Fig. 4: die Einzelheit c aus Fig. 3,
- Fig. 5: eine Ansicht eines weiteren Magnetsystems gemäß Fig. 1,
- Fig. 6: eine Querschnitt des Magnetsystems aus Fig. 4 und
- Fig. 7: die Einzelheit c aus Fig. 6.

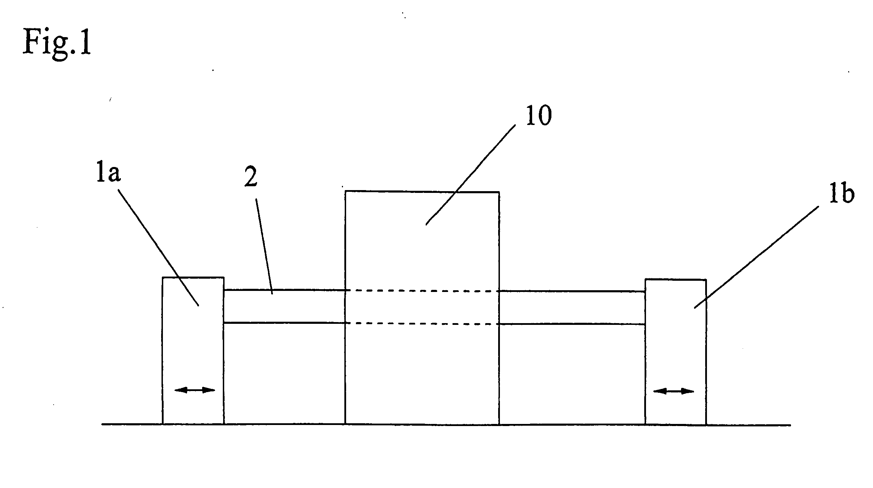

Die Vorrichtung in Fig. 1 hat einen in Richtung der Doppelpfeile verschiebbare Werkstückhalter mit zwei Aufnahmen la, 1b zur Fixierung eines zu erwärmenden Werkstücks 2. Zwischen den Aufnahmen la, 1b ist ein Magnetsystem 10 mit einer Ausnehmung für das Werkstück 2 zur Erzeugung eines zeitlich nicht konstanten magnetischen Flusses durch das Werkstück 2, wodurch ein Strom in dem Werkstück 2 induziert wird.

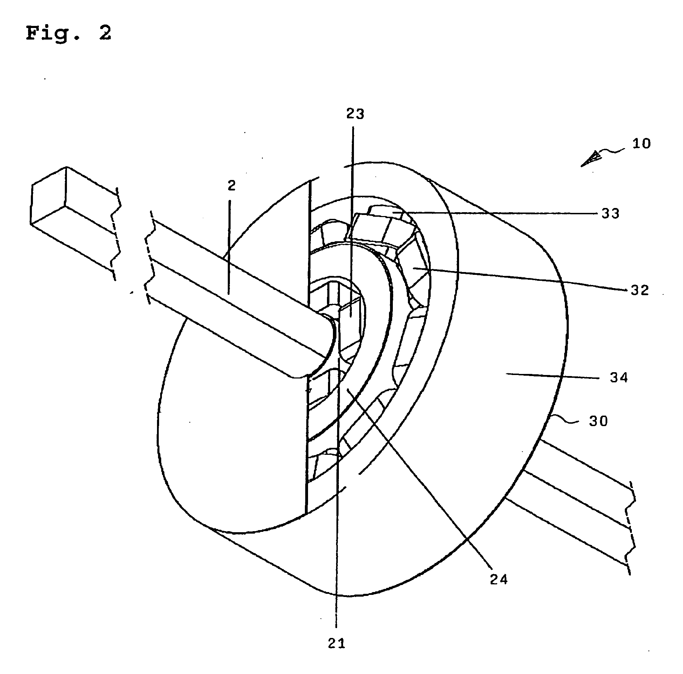

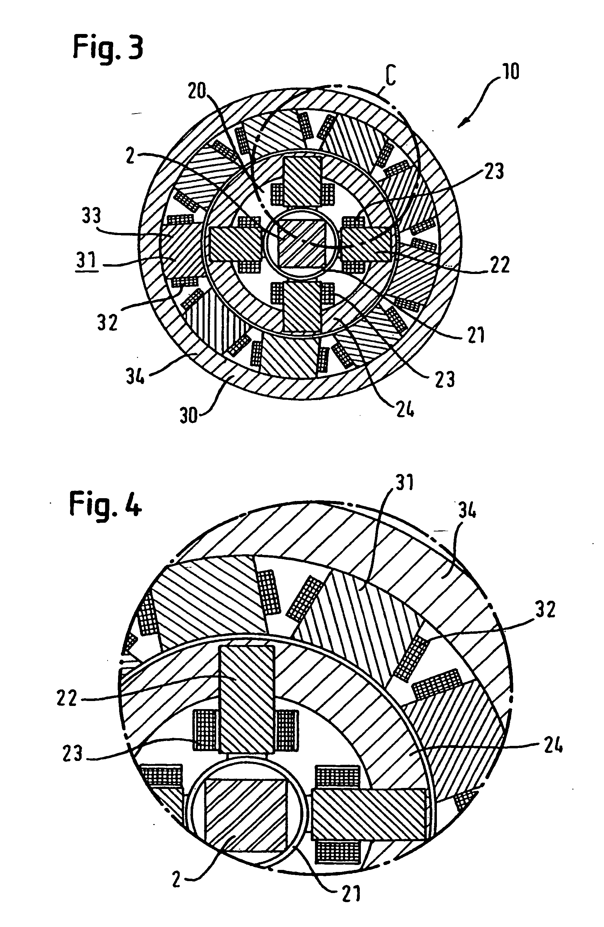

Die Fig. 2 bis 4 zeigen eine Ausführungsform eines Magnetsystems 10. Im Zentrum des Magnetsystems 10 befindet sich ein im Querschnitt quadratisches Werkstück 2. Konzentrisch um das Werkstück ist eine erste, um das Werkstück 2 drehbare Magneteinheit 20 mit einer ersten ringförmigen Isolierung 21, deren freier Innenraum zugleich die Ausnehmung für das Werkstück 2 ist. Um die erste Isolierung 21 sind vier Eisenkerne 22 äquidistant angeordnet, wobei die Längsachsen der Eisenkerne (nicht eingezeichnet) sich in einem Punkt mit der Längsachse (nicht eingezeichnet) der ersten Isolierung 21 schneiden. Auf jedem Eisenkern 22 sitzt eine HTSL-Spule 23. Die HTSL-Spulen 23 sind gleichstromgespeist (nicht dargestellt). Um die Spulen 23 ist eine ringförmige zweite Isolierung 24, in welche die Eisenkerne 22 eintauchen (Fig. 4).

Die erste Magneteinheit 20 ist konzentrisch von einer zweiten Magneteinheit 30 umgeben. Die zweite Magneteinheit 30 hat neun Elektromagnete 31 aus jeweils einer Spule 32 auf einem Polschuh 33. Die Elektromagnete 31 sind einzeln ansteuerbar und haben einen ringförmigen magnetischen Rückschluss 34. Durch eine umlaufende Ansteuerung der Elektromagnete 31 wird ein relativ zum Werkstück 2 rotierendes Magnetfeld erzeugt, welches mit dem Magnetfeld der gleichstromgespeisten HTSL-Spulen 23 der ersten Magneteinheit 20 zusammenwirkt und die erste Magneteinheit 20 um das Werkstück dreht. Dadurch ändert sich der von den HTSL-Spulen 23 erzeugte magnetische Fluss durch das Werkstück 2 wodurch in dem Werkstück 2 ein Strom induziert wird.

Weil die Eisenkerne 22 in die zweite Isolierung 24 bis kurz vor deren äußeren Rand eintauchen, ergibt sich eine gute magnetische Kopplung der ersten Magneteinheit 20 mit der zweiten Magneteinheit 30 und somit ein hoher Wirkungsgrad.

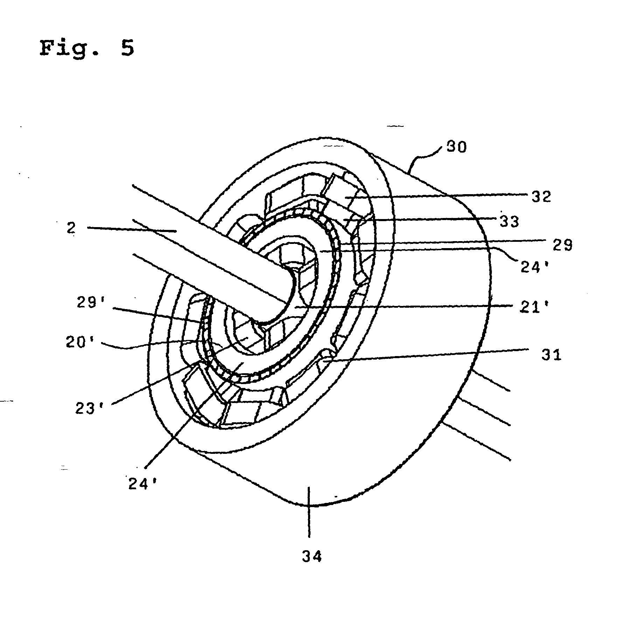

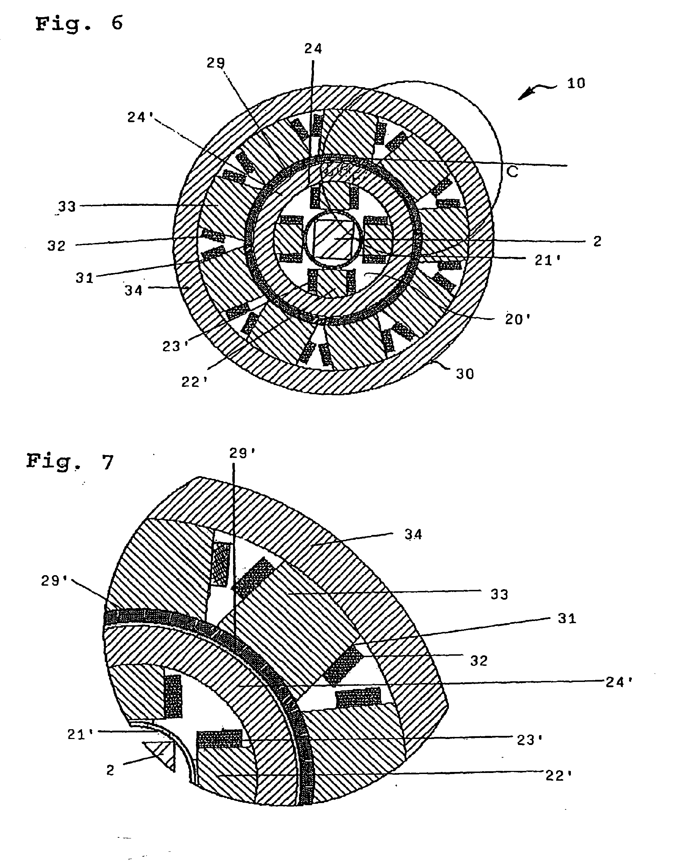

Die Fig. 5 bis 7 zeigen eine weitere Ausführungsform eines Magnetsystems 10. Der grundsätzliche Aufbau des Magnetsystems 10 ist ähnlich dem zuvor anhand Fig. 2, Fig. 3 und Fig. 4 beschriebenen, daher werden für gleiche Teile identische Bezugszeichen verwendet und lediglich die Unterschiede beschrieben. Im Unterschied zu dem Magnetsystem nach Fig. 2 tauchen die Eisenkerne 22' der HTSL-Spulen 23' nicht in die zweite ringförmige Isolierung 24' ein (vgl. auch Fig. 6 und Fig. 7). Dadurch kann die thermische Isolation der HTSL-Spulen 23' verbessert werden. Zur magnetischen Kopplung der ersten Magneteinheit 20' mit der zweiten Magneteinheit 30 sind auf der Mantelfläche der Isolierung 24' Permanentmagnete 29' befestigt. Der Drehantrieb der ersten Einheit erfolgt wie bei der Ausführungsform nach Fig. 2 über Anlegen eines Wechselstromes an die Spulen 32 der zweiten Magneteinheit 30. Jedoch wirkt das Magnetfeld der Spulen 32 hier im Wesentlichen mit dem Magnetfeld der Permanentmagnete 29' zusammen, wodurch die erste Magneteinheit 20' drehangetrieben wird.

Zwischen der Isolierung 24' und dem Eisenkern 22' kann ein nicht dargestellter magnetischer Rückschluss, z.B. in Form eines Eisenrings sein.

## Patentansprüche

1. Verfahren zum induktiven Erwärmen eines Werkstücks (2) durch Drehen einer ersten Magneteinheit (20) mit mindestens einer supraleitenden Spule (23) um das Werkstück, **dadurch gekennzeichnet, dass** mit einer zweiten Magneteinheit (30) ein sich um die Drehachse der ersten Magneteinheit (20) drehendes und die erste Magneteinheit (20) antreibendes Magnetfeld erzeugt wird.

2. Verfahren nach Anspruch 1, **dadurch gekennzeichnet, dass** zur Erzeugung des Magnetfeldes um die erste Magneteinheit (20) angeordnete Spulen der zweiten Magneteinheit mit einem Wechselstrom beaufschlagt werden.

3. Verfahren nach Anspruch 1, **dadurch gekennzeichnet, dass** zur Erzeugung des Magnetfeldes Permanentmagneten und/oder mindestens eine gleichstromdurchflossene Spule der zweiten Magneteinheit (30) um die Drehachse der ersten Magneteinheit (20) gedreht werden.

4. Verfahren nach einem der Ansprüche 1 bis 3, **dadurch gekennzeichnet, dass** die supraleitende Spule (23) mit Gleichstrom gespeist wird.

5. Vorrichtung zur induktiven Erwärmung eines in einen Werkstückhalter eingespannten Werkstückes (2) mit einer ersten Magneteinheit (20, 20'), die mindestens eine supraleitende Spule (23, 23') hat und um das Werkstück (2) drehbar ist, wobei das von der supraleitende Spule (23, 23') erzeugte Magnetfeld das induktiv zu erwärmende Werkstück (2) durchsetzt, **dadurch gekennzeichnet, dass** die Vorrichtung eine zweite Magneteinheit (30) hat, die ein um die Drehachse der ersten Magneteinheit (20, 20') rotierendes Magnetfeld erzeugt, um die erste Magneteinheit um das Werkstück zu drehen.

6. Vorrichtung nach Anspruch 5, **dadurch gekennzeichnet, dass** die supraleitende Spule (23, 23') an eine Konstantstromquelle angeschlossen ist.

7. Vorrichtung nach einem der Ansprüche 5 oder 6, **dadurch gekennzeichnet, dass** die erste Magneteinheit (20, 20') eine Ausnehmung hat, in die das Werkstück (2) einbringbar ist.

8. Vorrichtung nach Anspruch 7, **dadurch gekennzeichnet, dass** die erste Magneteinheit (20,20') mindestens zwei supraleitende Spulen (23, 23') hat, die zumindest etwa äquidistant um die Ausnehmung angeordnet sind.

9. Vorrichtung nach einem der Ansprüche 5 bis 8, **dadurch gekennzeichnet, dass** die zweite Magneteinheit (30) mindestens zwei relativ zum Werkstückhalter ortsfeste, mit einem Wechselstrom beaufschlagte Spulen hat.

10. Vorrichtung nach einem der Ansprüche 5 bis 9, **dadurch gekennzeichnet, dass** die zweite Magneteinheit Permanentmagneten und/oder mindestens eine gleichstromgespeiste Spule hat, die um die Drehachse der ersten Magneteinheit drehangetrieben sind bzw. ist.

11. Vorrichtung nach einem der Ansprüche 5 bis 10, **dadurch gekennzeichnet, daß** die erste Magneteinheit (20') drehfest mit der supraleitende Spule (23') verbundene Permanentmagneten (29') hat, wobei die Permanentmagneten (29') zwischen der supraleitenden Spule (23') und der zweiten Magneteinheit (30) angeordnet sind.

12. Vorrichtung nach einem der Ansprüche 5 bis 11, **dadurch gekennzeichnet, dass** zwischen der supraleitenden Spule (23, 23') und der zweiten Magneteinheit (30) eine Vorrichtung zur thermischen Isolation (24, 24') ist.

13. Vorrichtung nach Anspruch 12, **dadurch gekennzeichnet, dass** die Vorrichtung zur thermischen Isolation (24, 24') zwischen der supraleitenden Spule (23, 23') und der zweiten Magneteinheit (30) einen vakuumierten Hohlraum hat.

14. Vorrichtung nach einem der Ansprüche 5 bis 13, **gekennzeichnet durch** einen parallel zur Drehachse der ersten Magneteinheit (20, 20') schubangetriebenen Werkstückhalter.

## Claims

1. A method for inductive heating of a workpiece (2) by rotation of a first magnetic unit (20) with at least one superconducting coil (23) surrounding the workpiece, **characterized in that** a magnetic field which rotates about the rotational axis of the first magnetic unit (20) and drives the first magnetic unit (20) is generated with a second magnetic unit (30).

2. A method according to claim 1, **characterized in that** coils of the second magnetic unit which are arranged around the first magnetic unit are supplied with an alternating current for generating the magnetic field.

3. A method according to claim 1, **characterized in that** permanent magnets and/or at least one coil of the second magnetic unit (30), with direct current flowing through said coil, are twisted about the rotational axis of the first magnetic unit (20) for generating the magnetic field.

4. A method according to one of the claims 1 to 3, **characterized in that** the superconducting coil (23) is supplied with direct current.

5. An apparatus for inductive heating of a workpiece (2) clamped in a workpiece holding device, comprising a first magnetic unit (20, 20') having at least one superconducting coil (23, 23') and being rotatable about the workpiece (2), with the magnetic field generated by the superconducting coil (23, 23') penetrating the workpiece (2) to be heated inductively, **characterized in that** the apparatus comprises a second magnetic unit (30) which generates a magnetic field rotating about the rotational axis of the first magnetic unit (20, 20') in order to rotate the first magnetic unit about the workpiece.

6. An apparatus according to claim 5, **characterized in that** the superconducting coil (23, 23') is connected to a constant current source.

7. An apparatus according to one of the claims 5 or 6, **characterized in that** the first magnetic unit (20, 20') has a recess into which the workpiece (2) can be introduced.

8. An apparatus according to claim 7, **characterized in that** the first magnetic unit (20, 20') comprises at least two superconducting coils (23, 23') which are arranged at least approximately equidistantly around the recess.

9. An apparatus according to one of the claims 5 to 8, **characterized in that** the second magnetic unit (30) comprises at least two coils which are stationary relative to the workpiece holding device and are supplied with direct current.

10. An apparatus according to one of the claims 5 to 9, **characterized in that** the second magnetic unit comprises permanent magnets and/or at least one DC-supplied coil which is/are rotatably driven about the rotational axis of the first magnetic unit.

11. An apparatus according to one of the claims 5 to 10, **characterized in that** the first magnetic unit (20') comprises permanent magnets (29') which are connected in a torsion-proof manner with the superconducting coil (23'), with the permanent magnets (29') being arranged between the superconducting coil (23') and the second magnetic unit (30).

12. An apparatus according to one of the claims 5 to 11, **characterized in that** an apparatus for thermal insulation (24, 24') is arranged between the superconducting coil (23, 23') and the second magnetic unit (30).

13. An apparatus according to claim 12, **characterized in that** the apparatus for thermal insulation (24, 24') between the superconducting coil (23, 23') and the second magnetic unit (30) has a vacuumed cavity.

14. An apparatus according to one of the claims 5 to 13, **characterized by** a workpiece holding device which is thrust-driven parallel to the rotational axis of the first magnetic unit (20, 20').

## Revendications

1. Procédé pour le chauffage par induction d'une pièce d'oeuvre (2) par rotation d'une première unité magnétique (20) avec au moins une bobine supraconductrice (23) autour de la pièce d'oeuvre, **caractérisé en ce qu'**un champ magnétique tournant autour de l'axe de rotation de la première unité magnétique (20) et entraînant la première unité magnétique (20) est produit à l'aide d'une deuxième unité magnétique (30).

2. Procédé selon la revendication 1, **caractérisé en ce que** pour produire le champ magnétique, des bobines de la deuxième unité magnétique disposées autour de la première unité magnétique (20) reçoivent un courant alternatif.

3. Procédé selon la revendication 1, **caractérisé en ce que** pour produire le champ magnétique, des aimants permanents et/ou au moins une bobine parcourue par un courant continu de la deuxième unité magnétique (30) sont entraînés en rotation autour de l'axe de rotation de la première unité magnétique (20).

4. Procédé selon l'une des revendications 1 à 3, **caractérisé en ce que** la bobine supraconductrice (23) est alimentée en courant continu.

5. Dispositif pour le chauffage par induction d'une pièce d'oeuvre (2) serrée dans un porte-pièce avec une première unité magnétique (20, 20') qui possède au moins une bobine supraconductrice (23, 23') et qui peut tourner autour de la pièce d'oeuvre (2), dans lequel le champ magnétique produit par la bobine supraconductrice (23, 23') traverse la pièce d'oeuvre (2) à chauffer par induction, **caractérisé en ce que** le dispositif possède une deuxième unité magnétique (30) qui crée un champ magnétique tournant autour de l'axe de rotation de la première unité magnétique (20, 20') pour entraîner la première unité magnétique en rotation autour de la pièce d'oeuvre.

6. Dispositif selon la revendication 5, **caractérisé en ce que** la bobine supraconductrice (23, 23') est raccordée à une source de courant constant.

7. Dispositif selon l'une des revendications 5 ou 6, **caractérisé en ce que** la première unité magnétique (20, 20') possède un évidement dans lequel la pièce d'oeuvre (2) peut être introduite.

8. Dispositif selon la revendication 7, **caractérisé en ce que** la première unité magnétique (20,20') possède au moins deux bobines supraconductrices (23, 23') qui sont disposées au moins approximativement à égale distance autour de l'évidement.

9. Dispositif selon l'une des revendications 5 à 8, **caractérisé en ce que** la deuxième unité magnétique (30) possède au moins deux bobines stationnaires par rapport au porte-pièce et recevant un courant alternatif.

10. Dispositif selon l'une des revendications 5 à 9, **caractérisé en ce que** la deuxième unité magnétique possède des aimants permanents et/ou au moins une bobine alimentée en courant continu qui sont entraînés en rotation autour de l'axe de rotation de la première unité magnétique.

11. Dispositif selon l'une des revendications 5 à 10, **caractérisé en ce que** la première unité magnétique (20') possède des aimants permanents (29') reliés à la bobine supraconductrice (23') de façon solidaire en rotation, lesquels aimants permanents (29') sont disposés entre la bobine supraconductrice (23') et la deuxième unité magnétique (30).

12. Dispositif selon l'une des revendications 5 à 11, **caractérisé en ce qu'**un dispositif d'isolation thermique (24, 24') est disposé entre la bobine supraconductrice (23, 23') et la deuxième unité magnétique (30).

13. Dispositif selon la revendication 12, **caractérisé en ce que** le dispositif d'isolation thermique (24, 24') possède entre la bobine supraconductrice (23, 23') et la deuxième unité magnétique (30) un espace creux dans lequel le vide est fait.

14. Dispositif selon l'une des revendications 5 à 13, **caractérisé en ce qu'**il possède un porte-pièce entraîné en poussée parallèlement à l'axe de rotation de la première unité magnétique (20, 20').
